# EUROPÄISCHE PATENTSCHRIFT

(11) **EP 3 578 771 B1**
(45) Veröffentlichungstag und Bekanntmachung des Hinweises auf die Patenterteilung: **23.02.2022**
(21) Anmeldenummer: 19172781.7
(22) Anmeldetag: 06.05.2019
(51) Int. Cl.: F01N 3/20, F01N 13/00, F01N 9/00, F01N 3/08

(54) **KRAFTFAHRZEUG SOWIE EIN VERFAHREN ZUM BETRIEB EINES KRAFTFAHRZEUGS**
MOTOR VEHICLE AND A METHOD FOR OPERATING A MOTOR VEHICLE
VÉHICULE À MOTEUR ET PROCÉDÉ POUR FAIRE FONCTIONNER UN VÉHICULE À MOTEUR

(30) Priorität: 04.06.2018 DE 102018208705
(43) Veröffentlichungstag der Anmeldung: 11.12.2019
(73) Patentinhaber: Audi AG, 85045 Ingolstadt (DE)
(72) Erfinder: Ossadnik, Mark, 74182 Obersulm (DE)

(56) Entgegenhaltungen:
- EP-B1- 0 241 049
- DE-A1-102014 216 217
- DE-A1-102015 218 776
- DE-A1-102016 224 430
- KR-B1- 101 191 883
- US-A1- 2010 043 404

## Beschreibung

Die Erfindung betrifft ein Kraftfahrzeug, umfassend einen einer Verbrennungskraftmaschine nachgeschalteten, mehrere Abgasnachbehandlungseinrichtungen umfassenden Abgasstrang zur Reinigung eines Abgases der Verbrennungskraftmaschine, wobei der Abgasstrang einen SCR-Katalysator und wenigstens einen weiteren Katalysator umfasst, wobei der weitere Katalysator als ein NOx-Speicherkatalysator oder ein Oxidationskatalysator ausgebildet ist, wobei eine Steuerungseinrichtung zum Steuern wenigstens einer einen Einfluss auf die Temperatur des Abgases nehmende Betriebskomponente des Kraftfahrzeugs vorgesehen ist, wobei als Betriebskomponente die Verbrennungskraftmaschine und eine Heizeinrichtung in dem Abgasstrang vorgesehen ist, wobei die Steuerungseinrichtung dazu eingerichtet ist, die Betriebskomponente zur Einstellung der Temperatur des Abgases in Abhängigkeit wenigstens einer von einer zu erwartenden Fahrstrecke abhängenden Streckeninformation und einer Umsatzinformation betreffend eine temperaturabhängige Schadstoffumsatzrate wenigstens einer Abgasnachbehandlungseinrichtung des Abgasstrangs zu steuern.

Beim Betrieb von Verbrennungskraftmaschinen, insbesondere Dieselmotoren, werden mitunter umweltschädliche und/oder gesundheitsschädliche Stoffe wie beispielsweise Stickoxide (NOx), Kohlenstoffmonoxid (CO), unverbrannte Kohlenwasserstoffe (CmHn) sowie Rußpartikel emittiert. Daraus ergibt sich die Notwendigkeit, dass Abgase zunächst gereinigt bzw. nachbehandelt werden, bevor sie in die Atmosphäre emittiert werden. Mitunter sind dabei auch gesetzliche Grenzwerte zu berücksichtigen. Eine derartige Nachbehandlung bzw. Reinigung des Abgases erfolgt üblicherweise durch Abgasnachbehandlungseinrichtungen wie Katalysatoren oder Rußpartikelfilter.

Einerseits werden dafür häufig Oxidationskatalysatoren genutzt, bei denen Kohlenmonoxid und unverbrannte Kohlenwasserstoffe durch im Abgas vorhandenen Restsauerstoff entfernt werden. Zur Entfernung von Stickoxiden werden andererseits häufig NOx-Speicherkatalysatoren verwendet. Diese werden in einer ersten Phase (Speicherphase) betrieben, in der die Stickoxide in Speicherkomponenten des NOx-Speicherkatalysators eingespeichert werden. Dies kann solange erfolgen, bis eine Sättigung der Speicherkomponenten eintritt. Eine Regeneration bzw. ein Entladen der Speicherkomponenten erfolgt sodann in einer zweiten Phase (Regenerationsphase bzw. Fettbetrieb). Dabei wird das Abgas "angefettet", das heißt es wird mehr Treibstoff eingespritzt, als im Brennraum der Verbrennungskraftmaschine verbrannt wird, wodurch das Abgas einen erhöhten Anteil unverbrannter Kohlenwasserstoffe aufweist. Durch chemische Reaktionen der unverbrannten Kohlenwasserstoffe mit den in dem NOx-Speicherkatalysator gespeicherten Stickoxiden werden die Speicherkomponenten des NOx-Speicherkatalysators entladen. Zudem können zur Entfernung von Stickoxiden SCR-Katalysatoren (SCR: selektive katalytische Reduktion) verwendet werden. Dabei wird eine Harnstofflösung (zum Beispiel AdBlue^{®}) durch eine Einspritzeinheit dosiert und in das Abgas vor bzw. bei Eintritt in den SCR-Katalysator eingespritzt. Durch chemische Reaktionen werden sodann die Stickoxide im SCR-Katalysator letztendlich in Kohlendioxid, elementaren Stickstoff sowie Wasser umgewandelt.

In DE 10 2014 216 217 A1 ist ein Verfahren sowie ein System zur Reduktion von NOx-Emissionen in Abgasen einer Brennkraftmaschine eines KFZs offenbart. Ein der Brennkraftmaschine nachgeschalteter Abgasstrang umfasst dabei einen NOx-Speicherkatalysator, einen Oxidationskatalysator, und einen SCR-Katalysator. Daten betreffend eine zu erwartende Fahrstrecke werden dabei ausgewertet, wobei in Abhängigkeit davon eine Steuerung der Regenerationsphasen und Speicherphasen des NOx-Speicherkatalysators sowie der Dosierung der Harnstofflösung erfolgt.

DE 10 2016 224 430 A1 offenbart ein Verfahren sowie ein System zur Regeneration eines NOx-Speicher-Katalysators. Zu diesem Zweck ist eine Abgasheizvorrichtung vorgesehen, mittels der das Abgas in Abhängigkeit einer gegebenen Wegstrecke aufgeheizt wird. Eine elektrische Zuheizung des Abgases erfolgt derart, dass die Regeneration des NOx-Speicher-Katalysators bei idealen Temperaturbedingungen erfolgen kann.

DE 10 2015 218 776 A1 offenbart ein Fahrzeug mit einer Brennkraftmaschine mit nachgeschaltetem Abgasstrang umfassend einen SCR-Katalysator und einen Oxidationskatalysator. Anhand von Streckendaten sowie der Abgastemperatur wird eine Vorhersage betreffend eine Betriebsbedingung der Brennkraftmaschine ermittelt. In diesem Zusammenhang wird zur Verhinderung eines Reduktionsmittel-Schlupfes des SCR-Katalysators ein Reduktionsmittel mittels einer Dosiereinrichtung in den Abgasstrom eingebracht.

Ein weiteres Abgasnachbehandlungssystem ist aus US 2010/043404 A1 bekannt. Dieses umfasst einen Oxidationskatalysator, einen SCR-Katalysator und einen Partikelfilter. Mittels eines Motors wird bei diesem System eine Temperatur des Abgases im Hinblick auf temperaturabhängige Umsatzraten dieser Komponenten eingestellt. Hierzu werden insbesondere auch Informationen einer 3D-Karten-Einrichtung genutzt.

KR 101 191 883 B1 offenbart eine Abgasreinigungseinrichtung mit einem Oxidationskatalysator und einem Partikelfilter. Bei diesem System ist eine Kraftstoff-Luft-Injektionsvorrichtung vorgesehen, mittels der ein Kraftstoff-Luft-Gemisch in die Abgasreinigungseinrichtung eingebracht wird. Hierdurch wird die Temperatur des Abgases erhöht, um etwa eine effektivere Regeneration des Partikelfilters zu ermöglichen.

Der Erfindung liegt die Aufgabe zu Grunde, ein Kraftfahrzeug anzugeben, bei dem eine noch effizientere Reinigung des Abgases erfolgt.

Die Aufgabe wird durch ein Kraftfahrzeug der eingangs genannten Art gelöst, wobei erfindungsgemäß die Steuerungseinrichtung dazu eingerichtet ist, die jeweilige Betriebskomponente in Abhängigkeit einer ersten Wirkungsgradinformation betreffend den Wirkungsgrad der Heizung des Abgases durch die Verbrennungskraftmaschine und einer zweiten Wirkungsgradinformation betreffend den Wirkungsgrad der Heizung des Abgases durch die Heizeinrichtung auszuwählen.

Durch die erfindungsgemäße Verwendung prädiktiver Streckendaten sowie temperaturabhängiger Schadstoffumsatzraten kann insbesondere vorab zeitaufgelöst ermittelt werden, wie groß die jeweiligen Anteile der umgesetzten Schadstoffe des Abgases für die jeweilige Abgasnachbehandlungseinrichtung sind und mithin wie groß die Gesamtschadstoffumsatzrate ist. In Abhängigkeit davon kann sodann entschieden werden, zu welchen Zeitpunkten bzw. in welchen Zeitintervallen eine Erhöhung der Temperatur des Abgases durch die Betriebskomponente, insbesondere im Hinblick auf die Gesamtschadstoffumsatzrate, sinnvoll ist. Folglich kann durch die Einflussnahme auf die Temperatur des Abgases für eine zu absolvierende Fahrstrecke eine Verbesserung der Gesamtschadstoffumsatzrate erzielt werden.

Anhand der Streckeninformation kann vorab ermittelt werden, wie hoch die Temperatur des Abgases zu einem gewissen Zeitpunkt an einer gewissen Stelle im Abgasstrang ist. Die Streckeninformation kann dabei anhand von Daten gewonnen werden, die ein GPS-basiertes Navigationssystem bereitstellt. Insbesondere sind in diesem Zusammenhang Informationen bezüglich des Streckenverlaufs sowie des Höhenverlaufs der zu erwartenden Fahrstrecke relevant. Zusätzlich ist denkbar, dass eventuelle Geschwindigkeitsbeschränkungen und/oder die aktuelle Verkehrslage berücksichtigt werden.

Ferner können neben der Streckeninformation auch Fahrerinformationen betreffend den Fahrer, der die Fahrt antritt, zur Steuerung herangezogen werden. So sind beispielsweise für einen eher zurückhaltenden Fahrer stark ausgeprägte Beschleunigungsphasen und ein daraus resultierender Anstieg der Temperatur des Abgases eher untypisch. Bei Antritt der Fahrt kann der Fahrer beispielsweise automatisch identifiziert werden, wobei vorab gespeicherte Fahrerinformationen für den jeweiligen Fahrer, anhand derer die Steuerung erfolgen kann, hinterlegt sein können.

Die Streckeninformation wird nun zusammen mit einer Umsatzinformation betreffend temperaturabhängige Schadstoffumsatzraten genutzt, die Steuerung der Betriebskomponente vorzunehmen. Typische Temperaturabhängigkeiten bei Schadstoffumsatzraten der oben genannten Katalysatorentypen sind hinlänglich bekannt. Insbesondere werden dafür häufig Tabellen oder nummerische Modelle genutzt. Daraus ergibt sich beispielsweise, dass die optimale Betriebstemperatur eines SCR-Katalysatores höher ist als die eines NOx-Speicherkatalysators, die typischerweise bei etwa 200°C oder darüber liegt. Es sei angemerkt, dass die Betriebstemperatur nicht nur die Temperatur des Abgases, sondern auch die des Katalysators selbst betrifft, wobei eine Änderung der Temperatur des Abgases naturgemäß aufgrund von Wärmeleitprozessen Einfluss auf die Temperatur des Katalysators nimmt.

Die Einfluss auf die Temperatur des Abgases nehmende Betriebskomponente kann jedes Gerät des Kraftfahrzeugs sein, das Einfluss auf die Temperatur des Abgases nehmen kann. Insbesondere ist für die Betriebskomponente vorgesehen, dass diese Teil des Abgasstrangs ist bzw. einer Abgasnachbehandlungseinrichtung des Antriebsstrangs zugeordnet werden kann.

Die Verbrennungskraftmaschine, die insbesondere als ein Dieselmotor ausgebildet sein kann, ist Teil eines Antriebsstrangs. Unter dem Antriebsstrang werden alle Komponenten verstanden, die zur Übertragung des Moments der Verbrennungskraftmaschine auf die Reifen dienen. Der Antriebsstrang kann insbesondere Kupplungen, Getriebe und Differentiale sowie weitere Bauteile umfassen. Die von der Verbrennungskraftmaschine erzeugten Abgase werden durch den der Verbrennungskraftmaschine nachgeschalteten Abgasstrang geleitet, bevor diese in die Umgebung ausgestoßen werden. Die Abgase können dabei zunächst einem der Verbrennungskraftmaschine zugeordneten Abgasturbolader zugeführt werden, der einer Leistungssteigerung der Verbrennungskraftmaschine dient. Weiter stromabwärts im Abgasstrang kann der als NOx-Speicherkatalysator oder Oxidationskatalysator ausgebildete weitere Katalysator vorgesehen sein. Anschließend durchläuft das Abgas den SCR-Katalysator, der als ein eine SRC-Beschichtung aufweisenden Ruß- bzw. Dieselpartikelfilter ausgebildet sein kann. Zudem kann unmittelbar vor oder im SCR-Katalysator eine Dosiereinheit für die Harnstofflösung vorgesehen sein, durch die eine Anreicherung des Abgases mit der Harnstofflösung erfolgen kann.

In einem Ausführungsbeispiel kann das Kraftfahrzeug als ein Hybridfahrzeug ausgebildet sein. In diesem Fall ist zum Antrieb des Kraftfahrzeugs neben der Verbrennungskraftmaschine zusätzlich eine elektrische Maschine bzw. einen Elektromotor im Antriebsstrang vorgesehen. Die Steuerung der Betriebskomponente kann in diesen Ausführungsbeispiel auch zweckmäßigerweise unter Berücksichtigung einer Hybridinformation erfolgen. Hierbei kann insbesondere berücksichtigt werden, in welchen Zeitintervallen das Fahrzeug von der elektrischen Maschine bzw. dem Elektromotor und von der Verbrennungskraftmaschine angetrieben wird. In diesem Zusammenhang sind insbesondere dann niedrige Abgastemperaturen zu erwarten, wenn das Hybridfahrzeug von dem elektromotorischen zum verbrennungsmotorischen Antrieb wechselt. Insbesondere kann die Steuerungseinrichtung auch dazu eingerichtet sein, dass eine Auswahl des elektromotorischen und verbrennungsmotorischen Antriebs des Kraftfahrzeugs derart erfolgt, dass ungünstige Temperaturzustände des Abgases hinsichtlich der Gesamtschadstoffumsatzrate vermieden werden.

Die Steuerungseinrichtung kann dazu eingerichtet sein, die Betriebskomponente in Abhängigkeit von wenigstens einem, die Temperatur des Abgases längs des Abgasstrangs modellierenden Modells, das die Temperatur des Abgases in Abhängigkeit wenigstens einer den Fahrbetrieb betreffenden Größe modelliert, und/oder wenigstens einem sensorisch erfassten momentanen Temperaturwert zu steuern. Anhand der Streckeninformation kann vorab bestimmt werden, wie hoch die Anforderungen an den Antriebsstrang an einem gewissen Zeitpunkt sein werden. Daraus kann die zu erwartende Abgastemperatur zu diesem Zeitpunkt ermittelt werden. Die Bestimmung der Anforderungen an den Abgasstrang bzw. der zu erwartenden Abgastemperaturen kann beispielsweise über ein Modell erfolgen. Durch das Modell kann die Abgastemperatur an jeder Stelle des Abgasstrangs entsprechend kontinuierlich entlang des Abgasstrangs modelliert werden. Da jedoch die Umsetzung der Schadstoffe durch die jeweiligen Abgasnachbehandlungseinrichtungen an den jeweiligen Positionen im Abgasstrang erfolgt, sind typischerweise lokale bzw. punktuelle Werte für die Temperatur des Abgases für die Steuerung der Komponente ausreichend bzw. relevant. Der Einsatz entsprechend vereinfachter Modelle kann mithin zweckmäßig sein.

Alternativ oder zusätzlich kann vorgesehen sein, dass an einer oder an mehreren Stellen des Abgasstrangs Messwerte betreffend die momentane Abgastemperatur sensorisch erfasst und an die Steuerungseinrichtung übertragen werden. Die Steuerung der Betriebskomponente kann dann vorteilhafterweise zusätzlich in Abhängigkeit dieser Messwerte erfolgen. Zudem kann die Modellierung der Temperatur des Abgases ebenfalls unter Verwendung dieser sensorisch erfasster Daten erfolgen. Besonders vorteilhaft können die Messwerte laufend während der Fahrt erfasst und zur Steuerung der Betriebskomponente und/oder zur Modellierung der Temperatur des Abgases im Abgasstrang genutzt werden.

Für das erfindungsgemäße Kraftfahrzeug kann ferner vorgesehen sein, dass der Abgasstrang zusätzlich einen Unterboden-SCR-Katalysator aufweist. Dieser kann im Abgasstrang stromabwärts nach dem SCR-Katalysator angeordnet sein. Zudem kann dem Unterboden-SCR-Katalysator eine weitere Dosiereinheit für die Harnstofflösung zugeordnet sein. Dadurch kann der Harnstoffgehalt des Abgases für den SCR-Katalysator und den Unterboden-SCR-Katalysator separat eingestellt werden. Dadurch, dass mit dem Unterboden-SCR-Katalysator eine zusätzliche Abgasnachbehandlungseinrichtung des Abgasstrangs vorgesehen ist, kann eine noch effizientere Reinigung des Abgases erfolgen. Zudem weicht die temperaturabhängige Schadstoffumsatzrate des Unterboden-SCR-Katalysators von der des SCR-Katalysators sowie des NOx-Speicherkatalysators derart ab, sodass sich vorteilhaft effizientere Gesamtschadstoffumsatzraten bei beispielsweise höheren Temperaturwerten des Abgases ergeben.

Erfindungsgemäß ist vorgesehen, dass die durch die Steuerungseinrichtung angesteuerte Betriebskomponente zur Einstellung der Temperatur des Abgases die Verbrennungskraftmaschine ist. Hierbei kann insbesondere vorgesehen sein, dass die Einstellung der Temperatur des Abgases durch eine Verstellung der Verbrennungslage der Verbrennungskraftmaschine und/oder im Einsatz von Nacheinspritzungen und/oder dem Verstellen des Verbrennungsluftverhältnisses erfolgt.

Erfindungsgemäß ist zudem vorgesehen, dass die durch die Steuerungseinrichtung angesteuerte Betriebskomponente zur Einstellung der Temperatur des Abgases die Heizeinrichtung im Abgasstrang ist. Die Heizeinrichtung kann dabei insbesondere als eine elektrisch heizbare Scheibe ausgebildet sein, die im Abgasstrang mit dem Abgas im thermischen Kontakt steht. Zudem ist denkbar, dass die elektrisch heizbare Scheibe mit dem weiteren Katalysator im thermischen Kontakt steht. In diesem Fall bewirkt die Heizeinrichtung nicht nur eine indirekte Heizung des Abgases, sondern eine Heizung des Materials des weiteren Katalysators. Dies ist insbesondere deshalb vorteilhaft, da die temperaturabhängigen Schadstoffumsatzraten der Abgasnachbehandlungseinrichtungen nicht nur alleine von den Temperatur des Abgases abhängig ist, sondern insbesondere auch von der Temperatur der Abgasnachbehandlungseinrichtung selbst ist. Dieser Aspekt kann bei der Steuerung der Betriebskomponente miteinbezogen werden.

Die Steuerungseinrichtung ist erfindungsgemäß dazu eingerichtet, die jeweilige Betriebskomponente in Abhängigkeit der ersten Wirkungsgradinformation betreffend den Wirkungsgrad der Heizung des Abgases durch die Verbrennungskraftmaschine und der zweiten Wirkungsgradinformation betreffend den Wirkungsgrad der Heizung des Abgases durch die oder eine Heizeinrichtung auszuwählen. Der Wirkungsgrad der Heizung des Abgases beschreibt, wieviel Energie nötig ist, das Abgas und gegebenenfalls den jeweiligen Katalysator sowie die Betriebskomponente von einer unteren Temperatur Tu auf eine obere Temperatur To aufzuheizen. Entsprechende Kennfelder für die Heizung des Abgases durch innermotorische Maßnahmen sowie durch entsprechende Heizeinrichtungen sind hinlänglich bekannt.

Ergibt sich beispielsweise anhand der Streckeninformation sowie der Umsatzinformation, dass zu einem gewissen Zeitpunkt eine Heizung des Abgases von Tu auf To erfolgen soll, dann kann anhand der Kennfelder ermittelt werden, wie hoch der dazu nötige Energieaufwand für die Heizung durch die innermotorische Maßnahme sowie durch die Heizeinrichtung ist. Diejenige Methode, die dafür die geringere Energie benötigt, wird zweckmäßigerweise genutzt. Durch diesen Vergleich kann letztendlich vorteilhaft Energie bzw. Kraftstoff eingespart werden.

Für den Fall, dass die durch die Steuerungseinrichtung angesteuerte Betriebskomponente eine Heizeinrichtung in dem Abgasstrang ist, kann vorgesehen sein, dass ein Riemenstartergenerator vorgesehen ist, durch den mechanische Energie der Verbrennungskraftmaschine in elektrischer Energie, die zum Betrieb der Betriebskomponente nutzbar ist, umwandelbar ist. Daraus ergibt sich der Vorteil, dass beispielsweise durch den Betrieb der Betriebskomponente keine Belastung des Bordnetzes bzw. einer Starterbatterie des Kraftfahrzeugs erfolgt, was insbesondere bei niedrigen Außentemperaturen wünschenswert ist. Ferner stellt dies eine Ersparnis von Bauraum dar, da der Riemenstartergenerator ohnehin üblicherweise bereits in dem Kraftfahrzeug zum Starten der Verbrennungskraftmaschine verbaut ist.

Als eine Weiterbildung hiervon kann vorgesehen sein, dass der Lastpunkt der Verbrennungskraftmaschine, während mechanische Energie der Verbrennungskraftmaschine in elektrische Energie umgewandelt wird, anhebbar ist. Bei einer Erhöhung des Lastpunktes der Verbrennungskraftmaschine erzeugt diese durch Verbrennung von mehr Kraftstoff ein größeres Moment, als für den Vortrieb des Kraftfahrzeugs benötigt wird. Der "überschüssige" Anteil des Moments kann hierbei zur Erzeugung der elektrischen Energie durch den Riemenstartergenerator genutzt werden, die zum Betrieb der Betriebskomponente genutzt wird. Daraus ergibt sich der Vorteil, dass in dem Zeitraum, in dem mechanische Energie der Verbrennungskraftmaschine in elektrische Energie umgewandelt wird, nicht zwangsläufig eine Reduzierung der Antriebsleistung des Kraftfahrzeugs erfolgen muss. Ein gleichbleibendes Fahrverhalten des Kraftfahrzeugs wird mithin gewährleistet.

Zudem kann ein Energiespeicher vorgesehen sein, in dem rekuperierte Energie zum Betrieb der Betriebskomponente speicherbar ist. Daraus ergibt sich vorteilhafterweise die Möglichkeit, dass die Energie, die zum Betrieb der Betriebskomponente genutzt wird, bereits bevor die Heizung des Abgases erfolgt, erzeugt werden kann. So kann beispielsweise bei Bergabfahrten oder während eines Bremsvorgangs kinetische Energie des Kraftfahrzeugs durch Rekuperation in elektrische Energie umgewandelt werden und in dem Energiespeicher gespeichert werden. Der Energiespeicher kann dabei beispielsweise der Energiespeicher sein, in dem die zum Antrieb des Kraftfahrzeugs benötigte Energie gespeichert ist, sofern das Kraftfahrzeug als Hybridfahrzeug ausgebildet ist.

Für ein erfindungsgemäßes Kraftfahrzeug kann vorgesehen sein, dass die Steuerungseinrichtung zum Ansteuern wenigstens einer einen Einfluss auf den Regenerations- und Beladungsbetrieb des NOx-Speicherkatalysators nehmende, weitere Betriebskomponente des Kraftfahrzeugs in Abhängigkeit der Streckeninformation und/oder wenigstens einer den NOx-Speicherkatalysator betreffenden Speicherinformation eingerichtet ist. Wie bereits erläutert, muss der NOx-Speicherkatalysator im Fall, dass dieser voll beladen ist und mithin keine weiteren Schadstoffe aufnehmen kann, entladen werden. In diesem Fall kann die Steuerungseinrichtung dazu eingerichtet sein, die ohnehin vorhandene Streckeninformation zu nutzen, zusätzlich den Regenerations- und Beladungsbetrieb des NOx-Speicherkatalysators zu steuern. Insbesondere kann ermittelt werden, zu welchem Zeitpunkt der NOx-Speicherkatalysator entladen werden muss. Für den Fall, dass zu diesem Zeitpunkt ein elektromotorischer Betrieb des Kraftfahrzeugs vorgesehen ist, kann es zweckmäßig sei, den Fettbetrieb zeitlich vorzuziehen. Insbesondere kann der Fettbetrieb dann in einer Phase stattfinden, in der das Kraftfahrzeug verbrennungsmotorisch angetrieben wird. Die den NOx-Speicherkatalysator betreffende Speicherinformation kann insbesondere die verbleibende Speicherkapazität des NOx-Speicherkatalysators zu einem bestimmten Zeitpunkt betreffen.

Zudem kann auch vorgesehen sein, dass für die Steuerung des Regenerations- und Beladungsbetriebs des NOx-Speicherkatalysators die modellierten und/oder erfassten Abgastemperaturen berücksichtigt werden, da auch die Effizienz des Regernationsvorgangs des NOx-Speicherkatalysators temperaturabhängig ist.

Die Erfindung betrifft zudem ein Verfahren zum Betrieb eines Kraftfahrzeugs umfassend eine ein Abgas erzeugende Verbrennungskraftmaschine sowie einen mehrere Abgasnachbehandlungseinrichtungen umfassenden und der Verbrennungskraftmaschine nachgeschalteten Abgasstrang, wobei der Abgasstrang einen SCR-Katalysator und wenigstens einen weiteren Katalysator umfasst und der weitere Katalysator als ein NOx-Speicherkatalysator oder ein Oxidationskatalysator ausgebildet ist. Das Verfahren zeichnet sich dadurch aus, dass wenigstens eine einen Einfluss auf die Temperatur des Abgases nehmende Betriebskomponente des Kraftfahrzeugs angesteuert wird, wobei als Betriebskomponente die Verbrennungskraftmaschine und eine Heizeinrichtung in dem Abgasstrang vorgesehen ist, wobei die Betriebskomponente zur Einstellung der Temperatur des Abgases in Abhängigkeit wenigstens einer von einer zu erwartenden Fahrstrecke abhängenden Streckeninformation und einer Umsatzinformation betreffend eine temperaturabhängige Schadstoffumsatzrate wenigstens einer Abgasnachbehandlungseinrichtung des Abgasstrangs gesteuert wird, wobei die jeweilige Betriebskomponente in Abhängigkeit einer ersten Wirkungsgradinformation betreffend den Wirkungsgrad der Heizung des Abgases durch die Verbrennungskraftmaschine und einer zweiten Wirkungsgradinformation betreffend den Wirkungsgrad der Heizung des Abgases durch die Heizeinrichtung ausgewählt wird.

Bei dem erfindungsgemäßen Verfahren kann vorgesehen sein, dass die Betriebskomponente in Abhängigkeit von wenigstens einem, die Temperatur des Abgases längs des Abgasstrangs modellierenden Modells, das die Temperatur des Abgases in Abhängigkeit wenigstens einer den Fahrbetrieb betreffenden Größe modelliert, und/oder wenigstens einem sensorisch erfassten momentanen Temperaturwert gesteuert wird.

Außerdem ist erfindungsgemäß vorgesehen, dass die Betriebskomponente, die zur Einstellung der Temperatur des Abgases angesteuert wird, die Verbrennungskraftmaschine und die Heizeinrichtung in dem Abgasstrang ist.

Ferner wird die jeweilige Betriebskomponente erfindungsgemäß in Abhängigkeit der ersten Wirkungsgradinformation betreffend den Wirkungsgrad der Heizung des Abgases durch die Verbrennungskraftmaschine und der zweiten Wirkungsgradinformation betreffend den Wirkungsgrad der Heizung des Abgases durch die Heizeinrichtung ausgewählt.

Bei dem erfindungsgemäßen Verfahren kann vorgesehen sein, dass die Betriebskomponente durch elektrische Energie eines Riemenstartergenerators, der mechanische Energie der Verbrennungskraftmaschine in elektrische Energie umwandelt, und/oder eines Energiespeichers, in dem rekuperierte Energie gespeichert ist, betrieben wird. Hierbei kann insbesondere der Lastpunkt der Verbrennungskraftmaschine, während mechanische Energie der Verbrennungskraftmaschine von dem Riemenstartergenerator in elektrische Energie umgewandelt wird, angehoben werden.

Für das erfindungsgemäße Verfahren kann außerdem vorgesehen sein, dass wenigstens eine einen Einfluss auf die Regenerations- und Beladungsphasen des NOx-Speicherkatalysators nehmende, weitere Betriebskomponente des Kraftfahrzeugs in Abhängigkeit der Streckeninformation und/oder wenigstens einer den NOx-Speicherkatalysator betreffenden Speicherinformation gesteuert wird.

Sämtliche Merkmale und Vorteile des erfindungsgemäßen Kraftfahrzeugs können auf das erfindungsgemäße Verfahren übertragen werden.

Weitere Vorteile und Einzelheiten der vorliegenden Erfindung ergeben sich aus dem im Folgenden beschriebenen Ausführungsbeispiel sowie anhand der Zeichnungen. Dabei zeigt schematisch:
- Fig. 1: eine Ansicht eines Ausführungsbeispiels eines erfindungsgemäßen Kraftfahrzeugs, und
- Fig. 2: die Schafstoffumsatzraten einzelner Abgasnachbehandlungseinrichtungen des erfindungsgemäßen Kraftfahrzeugs aus Fig. 1 in Abhängigkeit der Temperatur.

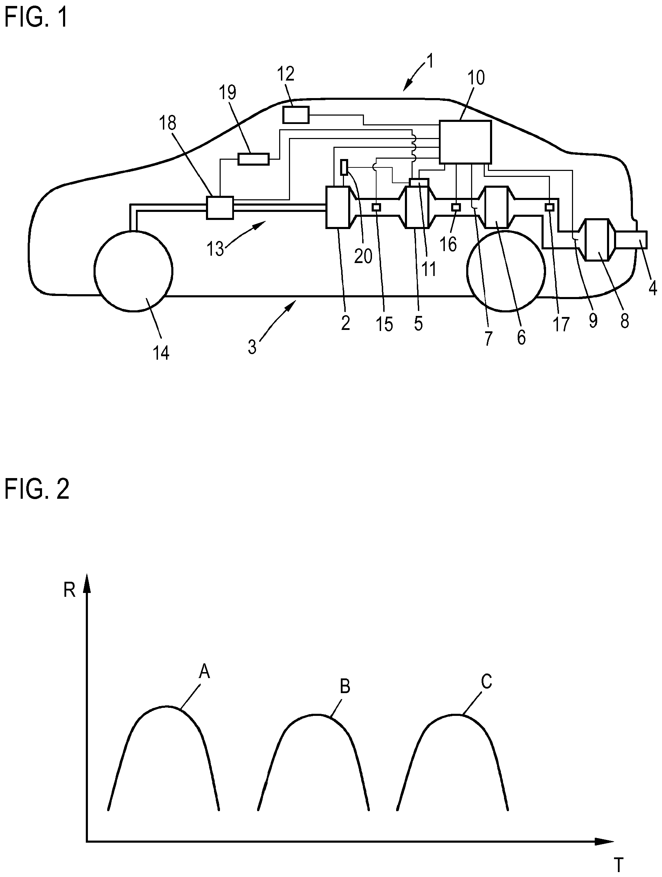

Fig. 1 zeigt eine schematische Ansicht eines Kraftfahrzeugs 1 umfassend eine als Dieselmotor ausgebildete Verbrennungskraftmaschine 2 sowie einen der Verbrennungskraftmaschine 2 nachgeschalteten Abgasstrang 3. Ein von der Verbrennungskraftmaschine 2 erzeugtes Abgas wird zur Reinigung von Schadstoffen durch den Abgasstrang 3 geleitet und schließlich über einen Auspuff 4 in die Umgebung abgegeben.

Der Abgasstrang 3 umfasst einen der Verbrennungskraftmaschine 2 nachgeschalteten, als NOx-Speicherkatalysator ausgebildeten weiteren Katalysator 5. Alternativ ist denkbar, dass der weitere Katalysator 5 stattdessen als ein Oxidationskatalysator ausgebildet ist. Der als NOx-Speicherkatalysator ausgebildete weitere Katalysator 5 umfasst Speicherkomponenten (nicht dargestellt), in denen Stickoxide (NOx) des Abgases eingespeichert werden, wodurch dieses gereinigt wird. Sind die Speicherkomponenten des als NOx-Speicherkatalysator ausgebildeten weiteren Katalysators 5 voll mit NOx beladen, dann muss eine Regenerationsphase des NOx-Speicherkatalysators erfolgen, bevor darin weitere Stickoxide gespeichert werden können. Bei der Regenerationsphase wird mehr Treibstoff eingespritzt, als im Brennraum der Verbrennungskraftmaschine 2 verbrannt wird, so dass das Abgas "angefettet", das heißt, mit einem höheren Anteil unverbrannter Kohlenwasserstoffe angereichert, wird. Die im als NOx-Speicherkatalysator ausgebildeten weiteren Katalysator 5 gespeicherten Stickoxide reagieren mit diesen unverbrannten Kohlenwasserstoffen, wobei eine Entladung der Speicherkomponenten erfolgt. Die dabei entstehenden Stoffe wie beispielsweise Kohlendioxid, elementarer Stickstoff und Wasser können anschließend in die Umgebung emittiert werden.

Weiter stromabwärts im Abgasstrang 3 ist ein SCR-Katalysator 6 (SCR: selektive katalytische Reduktion) vorgesehen. Hierbei wird eine Harnstofflösung über eine als Düse ausgebildete Dosiereinheit 7 in das Abgas eingespritzt. Dadurch werden im SCR-Katalysator 6 Stickoxide letztendlich in unschädliche Stoffe umgewandelt und schließlich in die Umgebung abgegeben. Zwischen dem SCR-Katalysator 6 und dem Auspuff 4 ist im Abgasstrang 3 ein Unterboden-SCR-Katalysator 8 mit einer weiteren, die Harnstofflösung in das Abgas einspritzende, Dosiereinheit 9 vorgesehen. Grundsätzlich ist jedoch der Unterboden-SCR-Katalysator 8 für das erfindungsgemäße Kraftfahrzeug 1 nicht zwingend erforderlich, sondern die Reinigung des Abgases kann gleichwohl in dem Abgasstrang 3 umfassend lediglich den SCR-Katalysator 6 sowie den weiteren Katalysator 5 erfolgen.

Eine Steuerungseinrichtung 10 des Kraftfahrzeugs 1 steuert eine als Heizscheibe ausgebildete Heizeinrichtung 11 sowie die Verbrennungskraftmaschine 2, die jeweils einen Einfluss auf die Temperatur des Abgases nehmende Betriebskomponenten darstellen. Die Steuerung erfolgt in Abhängigkeit einer von einer zu erwartenden Fahrstrecke abhängenden Streckeninformation, wobei die dafür relevanten Daten von einem GPS-basierten Navigationssystem 12 an die Steuerungseinrichtung 10 übermittelt werden. Ferner erfolgt die Steuerung in Abhängigkeit einer Umsatzinformation betreffend temperaturabhängige Schadstoffumsatzraten des als NOx-Speicherkatalysator ausgebildeten weiteren Katalysators 5, des SCR-Katalysators 6 und des Unterboden-SCR-Katalysators 8. Jede dieser drei Abgasnachbehandlungseinrichtungen 5, 6, 8 weist eine größtmögliche Schadstoffumsatzrate bei einer jeweils typischen Temperatur auf.

Eine schematische Ansicht der Schadstoffumsatzraten der Abgasnachbehandlungseinrichtungen 5, 6, 8 in Abhängigkeit der jeweiligen Betriebstemperatur ist in Fig. 2 dargestellt. Die Schadstoffumsatzrate bezieht sich dabei auf den Umsatz von Stickoxiden. Hierbei zeigt die Kurve A die Schadstoffumsatzrate eines NOx-Speicherkatalysators, die Kurve B des SCR-Katalysators 6 und die Kurve C des Unterboden-SCR-Katalysators 8. Hieraus wird ersichtlich, dass die bestmögliche Schadstoffumsatzrate des NOx-Speicherkatalysators 5 bei einer niedrigeren Temperatur vorliegt, als bei dem SCR-Katalysator 6. Demgegenüber liegt die bestmögliche Schadstoffumsatzrate des Unterboden-SCR-Katalysators 8 bei im Vergleich zu den beiden anderen Komponenten 5, 6 hohen Temperaturen vor.

Anhand der Streckeninformation bestimmt die Steuerungseinrichtung 10 vorab ein von der Verbrennungskraftmaschine 2 aufzubringendes Moment jeden Zeitpunkt der Fahrstrecke. Dabei werden neben dem Streckenverlauf auch der Höhenverlauf der Fahrstrecke, die aktuelle Verkehrslage, Geschwindigkeitsbeschränkungen sowie Information eines jeweiligen individuellen Fahrers berücksichtigt. Anhand des von der Verbrennungskraftmaschine 2 bereitzustellenden Moments kann die Temperatur des Abgases im Abgasstrang 3 modelliert werden. Alternativ ist jedoch auch denkbar, dass die Temperatur des Abgases im Abgasstrang 3 direkt anhand der Streckeninformation modelliert wird, ohne dass dazu zuvor das aufzubringende Moment der Verbrennungskraftmaschine 2 bestimmt wird. In beiden Fällen können zu diesem Zweck insbesondere nummerische Modelle benutzt werden.

Im Abgasstrang 3 sind zudem die Temperatursensoren 15, 16, 17 vorgesehen, die dem weiteren Katalysator 5, dem SCR-Katalysator 6 sowie dem Unterboden-SCR-Katalysator 8 jeweils vorgeschaltet sind. Die Temperatursensoren 15, 16, 17 übertragen Messdaten bezüglich der Temperatur des Abgases im Abgasstrang 3 kontinuierlich, das heißt in Abständen von beispielsweise einer Sekunde, an die Steuerungseinrichtung 10. Diese Daten stellen weitere Eingangsgrößen für das Modell dar, aus dem die Temperatur des Abgases im Abgasstrang 3 bestimmt wird.

Für das Modell, aus dem die Temperatur des Abgases im Abgasstrang 3 bestimmt wird, ist vorgesehen, dass die Temperaturen im Abgasstrang 3 nur an drei diskreten Stellen bestimmt wird, nämlich an bzw. in dem weiteren Katalysator 5, dem SCR-Katalysator 6 und dem Unterboden-SCR-Katalysator 8. Es ist zwar denkbar, dass für den kompletten Abgasstrang 3 der Temperaturverlauf des Abgases kontinuierlich bestimmt wird, allerdings wäre dies für den vorliegenden Zweck nicht nötig.

Anhand der modellierten Werte für die Temperatur des Abgases sowie der Umsatzinformationen betreffend die temperaturabhängigen Schadstoffumsatzraten für den weiteren Katalysator 5, den SCR-Katalysator 6 und den Unterboden-SCR-Katalysator 8 führt die Steuerungseinrichtung 10 eine Vorausberechnung der zu erwartenden Gesamtschadstoffumsatzrate durch. Ist diese kleiner als ein vorgegebener Grenzwert, dann ist für den betroffenen Zeitabschnitt vorgesehen, dass eine Heizung des Abgases durch Ansteuerung der Verbrennungskraftmaschine 2 bzw. der Heizeinrichtung 11 erfolgt, so dass die Gesamtschadstoffumsatzrate verbessert wird. Das Modell, mit dem die Temperatur des Abgases vorausbestimmt wird, berücksichtigt selbstverständlich ein Aufheizen des Abgases durch die Verbrennungskraftmaschine 2 bzw. die Heizeinrichtung 11.

Das Kraftfahrzeug 1 ist als ein Hybridfahrzeug ausgebildet. Somit ist es also möglich, dass das Kraftfahrzeug 1 sowohl durch die Verbrennungskraftmaschine 2 als auch durch eine elektrische Maschine 18, die ebenfalls eine Komponente des Antriebsstrangs 13 ist, angetrieben wird. Die elektrische Maschine 18 bezieht die für den Antrieb des Kraftfahrzeugs benötigte Energie aus einem elektrischen Energiespeicher 19. Anhand der Streckeninformation steuert die Steuerungseinrichtung 10 zudem, in welchen Zeitintervallen das Kraftfahrzeug 1 von der Verbrennungskraftmaschine 2 und von der elektrische Maschine 18 angetrieben wird. Diese Informationen werden auch bei der Bestimmung der Temperatur des Abgases im Abgasstrang 3 berücksichtigt. So sind beispielsweise an Zeitpunkten, an denen das Kraftfahrzeug 1 von dem elektromotorischen zu dem verbrennungsmotorischen Antrieb wechselt, vergleichsweise niedrige Temperaturen des Abgases im Abgasstrang 3 zu erwarten. Demgegenüber werden auch die Zeitabschnitte, in denen das Kraftfahrzeug 1 verbrennungsmotorisch und elektromotorisch angetrieben wird anhand der Temperaturen des Abgases im Abgasstrang 3 gesteuert. Dadurch können insbesondere ungünstige Situationen bezüglich der Gesamtschadstoffumsatzrate vermieden werden.

Wie bereits erwähnt erfolgt die Heizung des Abgases durch die Verbrennungskraftmaschine 2 und die Heizeinrichtung 11. Die Heizung des Abgases durch die Verbrennungskraftmaschine 2 folgt durch innermotorische Maßnahmen, das heißt, dass zum Beispiel eine Verstellung der Verbrennungslage, der Einsatz von Nacheinspritzungen oder eine Verstellung des Verbrennungsluftverhältnisses vorgenommen wird. Die Heizung des Abgases durch die Heizeinrichtung 11 erfolgt dadurch, dass die Heizeinrichtung 11 mit dem weiteren Katalysator 5 in thermischen Kontakt steht.

Hierbei sei erwähnt, dass die relevanten Schadstoffumsatzraten nicht nur von der Temperatur des Abgases, sondern auch von der Temperatur der Abgasnachbehandlungseinrichtung selbst abhängt. Bezüglich des dargestellten Ausführungsbeispiels bedeutet dies, dass bei der Heizung des Abgases durch die Heizeinrichtung 11 der als NOx-Speicherkatalysator ausgebildete weitere Katalysator 5 unmittelbar von der Heizeinrichtung 11 geheizt wird, während bei der Heizung des Abgases durch den Verbrennungsmotor 2 eine Aufheizung des weiteren Katalysators 5 erst zeitversetzt erfolgt, da dazu erst thermische Energie des Abgases an den weiteren Katalysator 5 abgegeben werden muss. Derartige Effekte werden bei der Modellierung der Temperatur des Abgases bzw. der Gesamtumsatzrate selbstverständlich berücksichtigt.

Ferner erfolgt die Auswahl, ob die Heizung des Abgases durch innermotorische Maßnahmen oder die Heizeinrichtung 11 erfolgt, in Abhängigkeit von jeweils zugehörigen Wirkungsgradinformationen. Ist beispielsweise für einen bestimmten Zeitpunkt vorgesehen, dass das Abgas von einer unteren Temperatur Tu auf eine obere Temperatur To aufgeheizt werden soll, dann kann für beide Heizmethoden die jeweils für diesen Heizvorgang benötigte Energie anhand vorliegender Wirkungsgradkennfelder bestimmt werden. Zweckmäßigerweise wird dann diejenige Heizmethode zum Heizen des Abgases gewählt, bei der der jeweilige Energieverbrauch geringer ist. Dadurch wird Energie bzw. Kraftstoff eingespart.

Die Verbrennungskraftmaschine 2 ist mit einem Riemenstartergenerator 20 derart gekoppelt, so dass der Riemenstartergenerator 20 mechanische Energie der Verbrennungskraftmaschine 2 in elektrische Energie umwandelt, die wiederum zum Betrieb der Heizeinrichtung 11 genutzt werden kann. Während dieses Vorgangs wird der Lastpunkt der Verbrennungskraftmaschine 2 angehoben. Das heißt, dass die von der Verbrennungskraftmaschine 2 zur Verfügung gestellte Leistung größer ist als die Leistung, die für den Vortrieb des Kraftfahrzeugs 1 momentan benötigt wird. Die dadurch überschüssige Leistung wird zum Betrieb der Heizeinrichtung 11 verwendet. Daraus ergibt sich der Vorteil, dass während des Betriebs der Heizeinrichtung 11 kein Abfall der für den Vortrieb des Kraftfahrzeugs 1 zur Verfügung gestellten Leistung eintritt. Die Heizeinrichtung 11 kann alternativ oder zusätzlich durch Energie des elektrischen Energiespeichers 19 betrieben werden. Besonders zweckmäßig wird hierbei in Situationen, in denen die Heizeinrichtung 11 nicht betrieben wird, Energie rekuperiert. Das heißt, kinetische Energie des Kraftfahrzeugs 1 wird insbesondere bei Talfahrten oder bei Bremsvorgängen durch einen Betrieb der elektrischen Maschine 18 als Generator in elektrische Energie umgewandelt, die wiederum in dem elektrischen Energiespeicher 19 gespeichert wird. Diese Energie kann dann zu einem späteren Zeitpunkt zum Betrieb der Heizeinrichtung 11 genutzt werden.

Ferner steuert die Steuerungseinrichtung 10 den Betrieb der Verbrennungskraftmaschine 2 bzw. der Heizeinrichtung 11 in Abhängigkeit davon, wann der als NOx-Speicherkatalysator ausgebildete weitere Katalysator 5 Regenerations- bzw. Beladungsphasen durchläuft. Umgekehrt werden natürlich auch die Regenerations- und Beladungsphasen des als NOx-Speicherkatalysators ausgebildeten weiteren Katalysator 5 in Abhängigkeit von der Temperatur des Abgases im Abgasstrang 3 bzw. der Streckeninformation gesteuert. Hierbei kann insbesondere berücksichtigt werden, dass während der Regenerationsphase eine gewisse Mindest-Betriebstemperatur des als NOx-Speicherkatalysator ausgebildeten weiteren Katalysators 5 vorliegen muss, da nur in diesem Fall die Regeneration erfolgt.

## Patentansprüche

1. Kraftfahrzeug, umfassend einen einer Verbrennungskraftmaschine (2) nachgeschalteten, mehrere Abgasnachbehandlungseinrichtungen umfassenden Abgasstrang (3) zur Reinigung eines Abgases der Verbrennungskraftmaschine (2), wobei der Abgasstrang (3) einen SCR-Katalysator (6) und wenigstens einen weiteren Katalysator (5) umfasst, wobei der weitere Katalysator (5) als ein NOx-Speicherkatalysator oder ein Oxidationskatalysator ausgebildet ist, wobei eine Steuerungseinrichtung (10) zum Steuern wenigstens einer einen Einfluss auf die Temperatur des Abgases nehmende Betriebskomponente des Kraftfahrzeugs vorgesehen ist, wobei als Betriebskomponente die Verbrennungskraftmaschine (2) und eine Heizeinrichtung (11) in dem Abgasstrang (3) vorgesehen ist, wobei die Steuerungseinrichtung (10) dazu eingerichtet ist, die Betriebskomponente zur Einstellung der Temperatur des Abgases in Abhängigkeit wenigstens einer von einer zu erwartenden Fahrstrecke abhängenden Streckeninformation und einer Umsatzinformation betreffend eine temperaturabhängige Schadstoffumsatzrate wenigstens einer Abgasnachbehandlungseinrichtung des Abgasstrangs (3) zu steuern,
**dadurch gekennzeichnet,**
**dass** die Steuerungseinrichtung (10) dazu eingerichtet ist, die jeweilige Betriebskomponente in Abhängigkeit einer ersten Wirkungsgradinformation betreffend den Wirkungsgrad der Heizung des Abgases durch die Verbrennungskraftmaschine (2) und einer zweiten Wirkungsgradinformation betreffend den Wirkungsgrad der Heizung des Abgases durch die Heizeinrichtung (11) auszuwählen.

2. Kraftfahrzeug nach Anspruch 1,
**dadurch gekennzeichnet,**
**dass** die Steuerungseinrichtung (10) dazu eingerichtet ist, die Betriebskomponente in Abhängigkeit von wenigstens einem, die Temperatur des Abgases längs des Abgasstrangs (3) modellierenden Modells, das die Temperatur des Abgases in Abhängigkeit wenigstens einer den Fahrbetrieb betreffenden Größe modelliert, und/oder wenigstens einem sensorisch erfassten momentanen Temperaturwert zu steuern.

3. Kraftfahrzeug nach Anspruch 1 oder 2,
**dadurch gekennzeichnet,**
**dass** der Abgasstrang (3) zusätzlich einen Unterboden-SCR-Katalysator (8) aufweist.

4. Kraftfahrzeug nach einem der vorangehenden Ansprüche,
**dadurch gekennzeichnet,**
**dass** ein Riemenstartergenerator (20) vorgesehen ist, durch den mechanische Energie der Verbrennungskraftmaschine (2) in elektrische Energie, die zum Betrieb der Betriebskomponente nutzbar ist, umwandelbar ist.

5. Kraftfahrzeug nach Anspruch 4,
**dadurch gekennzeichnet,**
**dass** der Lastpunkt der Verbrennungskraftmaschine (2), während mechanische Energie der Verbrennungskraftmaschine (2) in elektrische Energie umgewandelt wird, anhebbar ist.

6. Kraftfahrzeug nach einem der vorangehenden Ansprüche,
**dadurch gekennzeichnet,**
**dass** ein Energiespeicher (19) vorgesehen ist, in dem rekuperierte Energie zum Betrieb der Betriebskomponente speicherbar ist.

7. Kraftfahrzeug nach einem der vorangehenden Ansprüche,
**dadurch gekennzeichnet,**
**dass** die Steuerungseinrichtung (10) zum Ansteuern wenigstens einer einen Einfluss auf den Regenerations- und Beladungsbetrieb des oder eines NOx-Speicherkatalysators nehmende, weitere Betriebskomponente des Kraftfahrzeugs (1) in Abhängigkeit der Streckeninformation und/oder wenigstens einer den NOx-Speicherkatalysator betreffenden Speicherinformation eingerichtet ist.

8. Verfahren zum Betrieb eines Kraftfahrzeugs umfassend eine ein Abgas erzeugende Verbrennungskraftmaschine (2) sowie einen mehrere Abgasnachbehandlungseinrichtungen umfassenden und der Verbrennungskraftmaschine (2) nachgeschalteten Abgasstrang (3), wobei der Abgasstrang (3) einen SCR-Katalysator (6) und wenigstens einen weiteren Katalysator (5) umfasst und der weitere Katalysator (5) als ein NOx-Speicherkatalysator oder ein Oxidationskatalysator ausgebildet ist, wobei wenigstens eine einen Einfluss auf die Temperatur des Abgases nehmende Betriebskomponente des Kraftfahrzeugs (1) angesteuert wird, wobei als Betriebskomponente die Verbrennungskraftmaschine (2) und eine Heizeinrichtung (11) in dem Abgasstrang (3) vorgesehen ist, wobei die Betriebskomponente zur Einstellung der Temperatur des Abgases in Abhängigkeit wenigstens einer von einer zu erwartenden Fahrstrecke abhängenden Streckeninformation und einer Umsatzinformation betreffend eine temperaturabhängige Schadstoffumsatzrate wenigstens einer Abgasnachbehandlungseinrichtung des Abgasstrangs (3) gesteuert wird,
**dadurch gekennzeichnet,**
**dass** die jeweilige Betriebskomponente in Abhängigkeit einer ersten Wirkungsgradinformation betreffend den Wirkungsgrad der Heizung des Abgases durch die Verbrennungskraftmaschine (2) und einer zweiten Wirkungsgradinformation betreffend den Wirkungsgrad der Heizung des Abgases durch die Heizeinrichtung (11) ausgewählt wird.

9. Verfahren nach Anspruch 8,
**dadurch gekennzeichnet,**
**dass** die Betriebskomponente in Abhängigkeit von wenigstens einem, die Temperatur des Abgases längs des Abgasstrangs (3) modellierenden Modells, das die Temperatur des Abgases in Abhängigkeit wenigstens einer den Fahrbetrieb betreffenden Größe modelliert, und/oder wenigstens einem sensorisch erfassten momentanen Temperaturwert gesteuert wird.

10. Verfahren nach Anspruch 8 oder 9,
**dadurch gekennzeichnet,**
**dass** die Betriebskomponente durch elektrische Energie eines Riemenstartergenerators (20), der mechanische Energie der Verbrennungskraftmaschine (2) in elektrische Energie umwandelt, und/oder eines Energiespeichers (19), in dem rekuperierte Energie gespeichert ist, betrieben wird.

11. Verfahren nach einem der Ansprüche 8 bis 10,
**dadurch gekennzeichnet,**
**dass** wenigstens eine einen Einfluss auf die Regenerations- und Beladungsphasen des NOx-Speicherkatalysators nehmende, weitere Betriebskomponente des Kraftfahrzeugs (1) in Abhängigkeit der Streckeninformation und/oder wenigstens einer den NOx-Speicherkatalysator betreffenden Speicherinformation gesteuert wird.

## Claims

1. Motor vehicle, comprising an exhaust train (3), which is connected downstream of an internal combustion engine (2) and comprises a plurality of exhaust gas aftertreatment devices, for purifying an exhaust gas from the internal combustion engine (2), the exhaust train (3) comprising an SCR catalytic converter (6) and at least one further catalytic converter (5), the further catalytic converter (5) being configured as an NOx storage catalytic converter or an oxidation catalytic converter, a control device (10) being provided for controlling at least one operating component of the motor vehicle which influences the temperature of the exhaust gas, wherein the internal combustion engine (2) and a heating device (11) in the exhaust train (3) are provided as the operating components, the control device (10) being adapted to control the operating component for setting the temperature of the exhaust gas as a function of at least one item of route information which is dependent on an expected driving route and of an item of conversion information relating to a temperature-dependent pollutant conversion rate of at least one exhaust gas aftertreatment device of the exhaust gas train (3),
**characterised in that**
the control device (10) is adapted to select the respective operating component as a function of a first item of efficiency information relating to the efficiency of the heating of the exhaust gas by the internal combustion engine (2) and a second item of efficiency information relating to the efficiency of the heating of the exhaust gas by the heating device (11).

2. Motor vehicle according to claim 1,
**characterised in that**
**in that** the control device (10) is adapted to control the operating component as a function of at least one model which models the temperature of the exhaust gas along the exhaust train (3) and which models the temperature of the exhaust gas as a function of at least one variable relating to driving operation, and/or at least one instantaneous temperature value detected by sensors.

3. Motor vehicle according to claim 1 or 2,
**characterised in that**
the exhaust train (3) additionally has an underbody SCR catalytic converter (8).

4. Motor vehicle according to any one of the preceding claims,
**characterised in that**
a belt starter generator (20) is provided, by means of which mechanical energy of the internal combustion engine (2) can be converted into electrical energy, which can be used to operate the operating component.

5. Motor vehicle according to claim 4,
**characterised in that**
the load point of the internal combustion engine (2) can be raised while mechanical energy of the internal combustion engine (2) is being converted into electrical energy.

6. Motor vehicle according to any one of the preceding claims,
**characterised in that**
an energy store (19) is provided in which recuperated energy can be stored for operating the operating component.

7. Motor vehicle according to any one of the preceding claims,
**characterised in that**
the control device (10) is adapted to control at least one further operating component of the motor vehicle (1) which influences the regeneration and charging operation of the or an NOx storage catalytic converter as a function of the item of route information and/or at least one item of storage information relating to the NOx storage catalytic converter.

8. Method for operating a motor vehicle comprising an internal combustion engine (2) which produces an exhaust gas and an exhaust train (3) which comprises a plurality of exhaust gas aftertreatment devices and is connected downstream of the internal combustion engine (2), the exhaust train (3) comprising an SCR catalytic converter (6) and at least one further catalytic converter (5), and the further catalytic converter (5) being configured as an NOx storage catalytic converter or an oxidation catalytic converter, at least one operating component of the motor vehicle (1) which influences the temperature of the exhaust gas being controlled, wherein the internal combustion engine (2) and a heating device (11) in the exhaust train (3) are provided as the operating components, the operating component being controlled for setting the temperature of the exhaust gas as a function of at least one item of route information which is dependent on an expected driving route and of a conversion information item relating to a temperature-dependent pollutant conversion rate of at least one exhaust gas aftertreatment device of the exhaust gas train (3),
**characterised in that**
the respective operating component is selected as a function of a first item of efficiency information relating to the efficiency of the heating of the exhaust gas by the internal combustion engine (2) and a second item of efficiency information relating to the efficiency of the heating of the exhaust gas by the heating device (11).

9. Method according to claim 8,
**characterised in that**
the operating component is controlled as a function of at least one model which models the temperature of the exhaust gas along the exhaust train (3) and which models the temperature of the exhaust gas as a function of at least one variable relating to driving operation, and/or at least one instantaneous temperature value detected by sensors.

10. Method according to claim 8 or 9,
**characterised in that**
the operating component is operated by electrical energy from a belt starter generator (20) which converts mechanical energy from the internal combustion engine (2) into electrical energy, and/or from an energy storage device (19) in which recuperated energy is stored.

11. Method according to any one of claims 8 to 10,
**characterised in that**
at least one further operating component of the motor vehicle (1) which influences the regeneration and charging phases of the NOx storage catalytic converter is controlled as a function of the item of route information and/or at least one item of storage information relating to the NOx storage catalytic converter.

## Revendications

1. Véhicule automobile, comprenant un circuit de gaz d'échappement (3) monté en aval d'un moteur à combustion interne (2), comprenant plusieurs dispositifs de retraitement de gaz d'échappement pour le nettoyage d'un gaz d'échappement du moteur à combustion interne (2), dans lequel le circuit de gaz d'échappement (3) comprend un catalyseur SCR (6) et au moins un autre catalyseur (5), dans lequel l'autre catalyseur (5) est réalisé comme un catalyseur d'accumulation NOx ou un catalyseur d'oxydation, dans lequel un dispositif de commande (10) est prévu pour la commande d'au moins un composant de fonctionnement influant sur la température du gaz d'échappement du véhicule automobile, dans lequel comme composant de fonctionnement le moteur à combustion interne (2) et un dispositif de chauffage (11) sont prévus dans le circuit de gaz d'échappement (3), dans lequel le dispositif de commande (10) est conçu afin de commander le composant de fonctionnement pour le réglage de la température du gaz d'échappement en fonction d'au moins une information de trajet dépendant d'un trajet à attendre et d'une information de conversion concernant un taux de conversion de polluant dépendant de la température au moins d'un dispositif de retraitement de gaz d'échappement du circuit de gaz d'échappement (3),
**caractérisé en ce**
**que** le dispositif de commande (10) est conçu afin de sélectionner le composant de fonctionnement respectif en fonction d'une première information de rendement concernant le rendement du chauffage du gaz d'échappement par le moteur à combustion interne (2) et d'une seconde information de rendement concernant le rendement du chauffage du gaz d'échappement par le dispositif de chauffage (11).

2. Véhicule automobile selon la revendication 1,
**caractérisé en ce**
**que** le dispositif de commande (10) est conçu afin de commander le composant de fonctionnement en fonction d'au moins un modèle modélisant la température du gaz d'échappement le long du circuit de gaz d'échappement (3), qui modélise la température du gaz d'échappement en fonction d'au moins une grandeur concernant le mode de conduite, et/ou au moins une valeur de température momentanée détectée par capteur.

3. Véhicule automobile selon la revendication 1 ou 2,
**caractérisé en ce**
**que** le circuit de gaz d'échappement (3) présente en outre un catalyseur SCR de dessous de caisse (8).

4. Véhicule automobile selon l'une quelconque des revendications précédentes, **caractérisé en ce**
**qu'**un générateur de démarreur de courroie (20) est prévu, par lequel de l'énergie mécanique du moteur à combustion interne peut être convertie en énergie électrique qui peut être utilisée pour le fonctionnement du composant de fonctionnement.

5. Véhicule automobile selon la revendication 4,
**caractérisé en ce**
**que** le point de charge du moteur à combustion interne (2) peut être augmenté pendant la conversion de l'énergie mécanique du moteur à combustion interne (2) en énergie électrique.

6. Véhicule automobile selon l'une quelconque des revendications précédentes, **caractérisé en ce**
**qu'**un accumulateur d'énergie (19) est prévu, dans lequel de l'énergie récupérée peut être accumulée pour le fonctionnement du composant de fonctionnement.

7. Véhicule automobile selon l'une quelconque des revendications précédentes, **caractérisé en ce**
**que** le dispositif de commande (10) est conçu pour la commande d'au moins un autre composant de fonctionnement influant sur le fonctionnement de régénération et de chargement du ou d'un catalyseur d'accumulation NOx du véhicule automobile (1) en fonction de l'information de trajet et/ou d'au moins une information d'accumulateur concernant le catalyseur d'accumulation NOx.

8. Procédé de fonctionnement d'un véhicule automobile comprenant un moteur à combustion interne (2) générant un gaz d'échappement ainsi qu'un circuit de gaz d'échappement (3) comprenant plusieurs dispositifs de retraitement de gaz d'échappement et monté en aval du moteur à combustion interne (2), dans lequel le circuit de gaz d'échappement (3) comprend un catalyseur SCR (6) et au moins un autre catalyseur (5) et l'autre catalyseur (5) est réalisé comme un catalyseur d'accumulation NOx ou un catalyseur d'oxydation, dans lequel au moins un composant de fonctionnement influant sur la température du gaz d'échappement du véhicule automobile (1) est commandé, dans lequel comme composant de fonctionnement le moteur à combustion interne (2) et un dispositif de chauffage (11) sont prévus dans le circuit de gaz d'échappement (3), dans lequel le dispositif de commande est commandé pour le réglage de la température du gaz d'échappement en fonction d'au moins une information de trajet dépendant d'un trajet à attendre et d'une information de conversion concernant un taux de conversion de polluant dépendant de la température au moins d'un dispositif de retraitement de gaz d'échappement du circuit de gaz d'échappement (3),
**caractérisé en ce**
**que** le composant de fonctionnement respectif est sélectionné en fonction d'une première information de rendement concernant le rendement du chauffage du gaz d'échappement par le moteur à combustion interne (2) et d'une seconde information de rendement concernant le rendement du chauffage du gaz d'échappement par le dispositif de chauffage (11).

9. Procédé selon la revendication 8,
**caractérisé en ce**
**que** le composant de fonctionnement est commandé en fonction d'au moins un modèle modélisant la température du gaz d'échappement le long du circuit de gaz d'échappement (3), qui modélise la température du gaz d'échappement en fonction d'au moins une grandeur concernant le mode de conduite, et/ou d'au moins une valeur de température momentanée détectée par capteur.

10. Procédé selon la revendication 8 ou 9,
**caractérisé en ce**
**que** le composant de fonctionnement fonctionne par de l'énergie électrique d'un générateur de démarreur de courroie (20) qui convertit de l'énergie mécanique du moteur à combustion interne (2) en énergie électrique, et/ou d'un accumulateur d'énergie (19), dans lequel de l'énergie récupérée peut être accumulée.

11. Procédé selon l'une quelconque des revendications 8 à 10,
**caractérisé en ce**
**qu'**au moins un autre composant de fonctionnement influant sur les phases de régénération et de chargement du catalyseur d'accumulation NOx du véhicule automobile (2) est commandé en fonction de l'information de trajet et/ou d'au moins une information d'accumulateur concernant le catalyseur d'accumulation NOx.
